# EUROPEAN PATENT APPLICATION

(11) **EP 4 228 321 A1**
(43) Date of publication of application: **16.08.2023**
(21) Application number: 20956717.1
(22) Date of filing: 07.10.2020
(51) Int. Cl.: H04W 36/06, H04W 76/10, H04W 48/10, H04W 48/12, H04W 48/20

(54) **WIRELESS BASE STATION AND TERMINAL**

(71) Applicant: NTT DOCOMO, INC., Tokyo 100-6150 (JP)
(72) Inventor: UCHIYAMA Tadashi, Tokyo 100-6150 (JP); MIN Tianyang, Tokyo 100-6150 (JP)
(74) Representative: Hoffmann Eitle
(86) International application number: PCT/JP2020/038032
(87) International publication number: WO 2022/074769

(57) **Abstract**

A gNB (100A) transmits notification information to a terminal (200) in a cell. The gNB (100A) causes information about a slice supported via the cell to be included in the notification information.

## Description

### Technical Field

The present disclosure relates to a radio base station and a terminal supporting network slicing.

### Background Art

The 3rd Generation Partnership Project (3GPP) specifies the 5th generation mobile communication system (also called 5G, New Radio (NR), or Next Generation (NG)) and is also preparing next generation specifications called Beyond 5G, 5G Evolution, or 6G.

Release 17 of the 3GPP considers enabling terminals (user equipment, UE) to perform cell selection (including reselection) with an awareness of slices supported by RAN nodes with respect to network slicing, in which a radio access network (RAN) is divided into multiple slices according to different service requirements (Non-Patent Literatures 1 and 2).

### Citation List

### Non-Patent Literature

Non-Patent Literature 1: "Study on enhancement of RAN Slicing", RP-193254, 3GPP TSG-RAN meeting #86, 3GPP, December 2019
Non-Patent Literature 2: "Key Issue on 5GC assisted cell selection to access network slice", S2-2001467, 3GPP SA WG2 Meeting #136 Ad-hoc, 3GPP, January 2020

### Summary of the Invention

However, in the current 3GPP specifications (release 16), UEs cannot recognize the slices supported by RAN nodes (cells).

Thus, when a slice (which may be interpreted as a service type) that a RAN node (cell) does not support is requested by a UE, an access and mobility management function (AMF) must reject the request.

Thus, the following disclosure has been made in view of such a situation and aims to provide a radio base station and a terminal that are capable of realizing appropriate cell selection with an awareness of a slice supported by an RAN node (cell).

One aspect of the present disclosure is a radio base station (for example, gNB 100A) including a transmission unit (system information transmission unit 140) that transmits notification information to a terminal (UE 200) in a cell, and a control unit (control unit 150) that causes information about a slice supported via the cell to be included in the notification information.

One aspect of the present disclosure is a radio base station (for example, gNB 100A) including a transmission unit (radio transmission unit 110) that transmits a message of a radio resource control layer to a terminal (UE 200) in a cell, and a control unit (control unit 150) that causes information about a slice supported via the cell to be included in the message.

One aspect of the present disclosure is a terminal (UE 200) including a reception unit (system information reception unit 225) that receives notification information notified in a cell, and a control unit (control unit 250) that performs cell selection based on information about a slice supported via the cell, the information being included in the notification information.

One aspect of the present disclosure is a terminal (UE 200) including a reception unit (radio reception unit 250) that receives a message of a radio resource control layer, and a control unit (control unit 250) that performs cell selection based on information about a slice supported via a camp-on cell, the information being included in the message.

One aspect of the present disclosure is a radio base station (for example, gNB 100A) including a reception unit (handover processing unit 145) that receives a handover request of a terminal (UE 200) in a cell from a handover-source radio base station, a control unit (control unit 150) that determines a setting for initial access based on information about a slice supported via the cell, the information being included in the handover request, and a transmission unit that transmits setting information indicating the setting that has been determined to the handover-source radio base station.

### Brief Description of Drawings

[FIG. 1] FIG. 1 is an overall schematic configuration diagram of a radio communication system 10.
[FIG. 2] FIG. 2 is a functional block configuration diagram of a gNB 100A.
[FIG. 3] FIG. 3 is a functional block configuration diagram of a UE 200.
[FIG. 4] FIG. 4 is a diagram illustrating an example communication sequence for conventional cell selection when slices are used.
[FIG. 5] FIG. 5 is a diagram illustrating an example communication sequence for cell selection according to operation example 1-1.
[FIG. 6] FIG. 6 is a diagram illustrating an example communication sequence for cell selection according to operation example 1-2.
[FIG. 7] FIG. 7 is a diagram illustrating an example communication sequence for a handover according to operation example 2.
[FIG. 8] FIG. 8 is a diagram illustrating an example configuration of PLMN-IdentityInfoList included in cellAccessRelatedInfo.
[FIG. 9] FIG. 9 is a diagram illustrating an example configuration of SIB4.
[FIG. 10] FIG. 10 is a diagram illustrating an example configuration of an RRCRelease message.
[FIG. 11] FIG. 11 is a diagram illustrating an example configuration of an RRCRelease message.
[FIG. 12] FIG. 12 is a diagram illustrating an example configuration of handover preparation information.
[FIG. 13] FIG. 13 is a diagram illustrating an example hardware configuration of the gNB 100A, a gNB 100B, and the UE 200.

### Description of Embodiments

Embodiments will be described below with reference to the drawings. Note that the same or similar reference numerals have been attached to the same functions and configurations, and the description thereof will be omitted as appropriate.

### (1) Overall schematic configuration of radio communication system

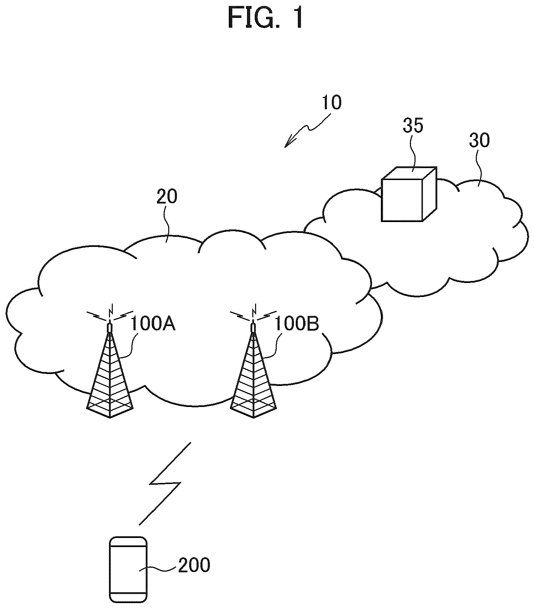

FIG. 1 is an overall schematic configuration diagram of a radio communication system 10 according to the present embodiment. The radio communication system 10 is a 5G New Radio (NR)-compliant radio communication system and includes a next generation-radio access network 20 (hereinafter, NG-RAN 20) and user equipment 200 (hereinafter, UE 200) .

Note that the radio communication system 10 may be compliant with a system called Beyond 5G, 5G Evolution, or 6G.

The NG-RAN 20 includes a radio base station 100A (hereinafter, gNB 100A) and a radio base station 100B (hereinafter, gNB 100B). Note that the specific configuration of the radio communication system 10 including the number of gNBs and UEs is not limited to the example in FIG. 1.

The NG-RAN 20 actually includes a plurality of NG-RAN nodes (which may be abbreviated as RAN nodes), specifically gNBs (or ng-eNBs), and is connected to a 5G-compliant core network 5GC 30. The NG-RAN 20 and 5GC 30 may be expressed simply as a "network".

The 5GC 30 may include an access and mobility management function 35 (hereinafter, AMF 35), which is included in the system architecture of 5G and provides a mobility management function for the UE 200.

The radio communication system 10 can support network slicing. Network slicing is a technique to realize division of a single network into multiple slices according to different service requirements. Network slicing may be interpreted as a technique to logically divide a configuration or resource according to various requirements or characteristics of communication services.

In network slicing, slices can be formed using identifiers called S-NSSAIs (single-network slice selection assistance information). An S-NSSAI can be used (carried around) between the UE 200, NG-RAN 20, and 5GC 30.

As service types (SST), enhanced mobile broadband (eMBB, high speed and high capacity), massive Internet of Things (mIoT, multiple connections, low power, low cost), ultra-reliable and low latency communications (URLLC, low latency, high confidence), and the like may be defined.

### (2) Functional block configuration of radio communication system

Next, a functional block configuration of the radio communication system 10 will be described. Specifically, functional block configurations of the gNB 100A and the UE 200 will be described.

### (2.1) gNB 100A

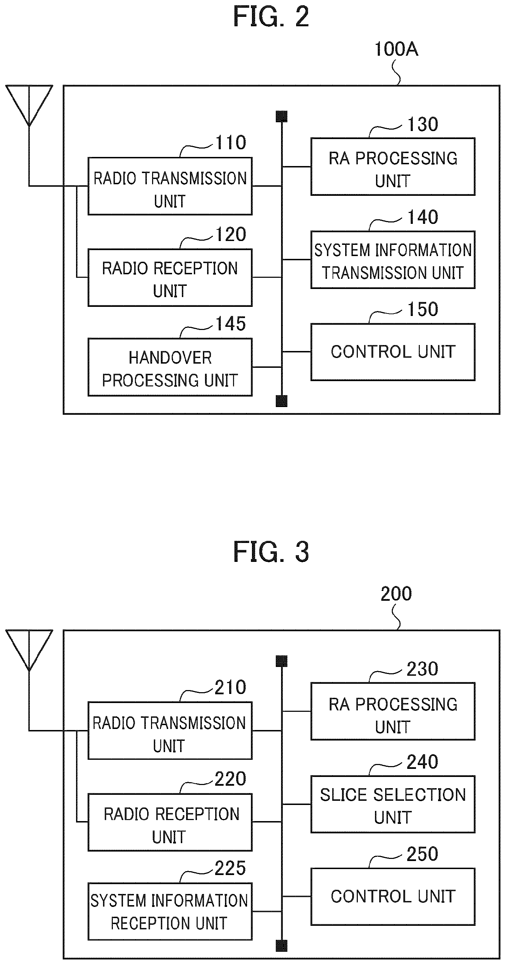

FIG. 2 is a functional block configuration diagram of the gNB 100A. As illustrated in FIG. 2, the gNB 100A includes a radio transmission unit 110, a radio reception unit 120, an RA processing unit 130, a system information transmission unit 140, a handover processing unit 145, and a control unit 150. Note that the gNB 100B may have the same functional block configuration.

The radio transmission unit 110 transmits a radio signal in accordance with NR, specifically a downlink signal (DL signal), to the UE 200.

In the present embodiment, the radio transmission unit 110 can transmit a message of a radio resource control layer (RRC) to the UE 200 in a cell. In the present embodiment, the radio transmission unit 110 constitutes a transmission unit that transmits a message of a radio resource control layer to a terminal in a cell.

The message may include various RRC messages specified in 3GPP TS38.331. For example, RRCSetup, RRCReject, RRCReconfiguration, RRCReestablishment, RRCRelease, and the like may be included.

The radio reception unit 120 receives a radio signal in accordance with NR, specifically an uplink signal (UL signal) from the UE 200. The radio reception unit 120 may receive a message of an RRC from the gNB 100A. The message may include various RRC messages specified in 3GPP TS38.331. Specifically, RRC messages corresponding to the above-described RRC messages may be included.

The UE 200 in a cell may be interpreted as a UE camping on or present in a cell formed by the gNB 100A.

The RA processing unit 130 performs processing for a random access procedure (RA procedure). Specifically, the RA processing unit 130 may support a contention-based RA procedure (CBRA) and a contention-free RA procedure (CFRA). The RA processing unit 130 may also support four-step and two-step RA procedures. The random access procedure may be interpreted as a procedure for initial access performed by the UE 200.

Based on an instruction from the control unit 150, the RA processing unit 130 can transmit configuration information indicating a configuration for initial access, specifically, a configuration of a random access channel (RACH) (RACH configuration), to a handover-source radio base station (for example, gNB 100B) for the UE 200. In the present embodiment, the RA processing unit 130 includes a transmission unit that transmits configuration information to a handover-source radio base station.

The RACH configuration may be determined based on information about a slice supported via a cell. Such an RACH configuration may be called a slice-based RACH configuration.

The system information transmission unit 140 transmits system information into a cell formed by the gNB 100A. Specifically, the system information transmission unit 140 can transmit various system information blocks (SIB) to the UE 200 in the cell. Such system information may be interpreted as notification information. In the present embodiment, the system information transmission unit 140 constitutes a transmission unit that transmits notification information to a terminal in a cell.

The SIB may include SIB1 and SIB4. SIB1 may include information relevant when evaluating whether the UE 200 is authorized to access a cell and may define scheduling of other system information. SIB1 may also include radio resource configuration information that is common to all UEs and prohibition information applicable to integrated access control.

SIB4 may include information about cell reselection among frequencies, that is, information about other NR frequencies and neighbor cells of various frequencies in relation to cell reselection. An information element (IE) may include a cell reselection parameter that is common to frequencies and a cell-specific reselection parameter.

Note that the notification information may be of another type other than SIB1 and SIB4 as long as the purpose is to notify some kind of information to the UE 200. The notification information may be broadcast to multiple UEs or may be unicast to a specific UE.

The handover processing unit 145 performs processing for a handover of the UE 200. Specifically, the handover processing unit 145 can perform processing when the gNB 100A becomes a handover-source radio base station (source radio base station) or when the gNB 100A becomes a handover-target radio base station (target radio base station).

More specifically, the handover processing unit 145 transmits and receives an RRC message between nodes and performs handover processing. For example, the handover processing unit 145 can transmit and receive a handover command, a handover request, a handover request Ack, and the like. In the present embodiment, the handover processing unit 145 includes a receiving unit that receives a handover request of the UE 200 in the cell from a handover-source radio base station.

The control unit 150 controls functional blocks that make up the gNB 100A. In particular, in the present embodiment, the control unit 150 can cause information about a slice supported via a cell to be included in notification information. Specifically, the control unit 150 can cause information about a slice to be included in system information (SIB) transmitted by the system information transmission unit 140.

The control unit 150 can also cause information about a slice supported via a cell to be included in an RRC message. Specifically, the control unit 150 can cause information about a slice to be included in an RRC message transmitted by the radio transmission unit 110.

A slice supported via a cell may mean a slice supported by the cell itself formed by the gNB 100A or a slice supported by an area (for example, RAN-AreaCode) or a radio access network (RAN) including the cell.

It is sufficient that information about a slice be information that can identify a slice supported via a cell. For example, information about a slice may be an S-NSSAI.

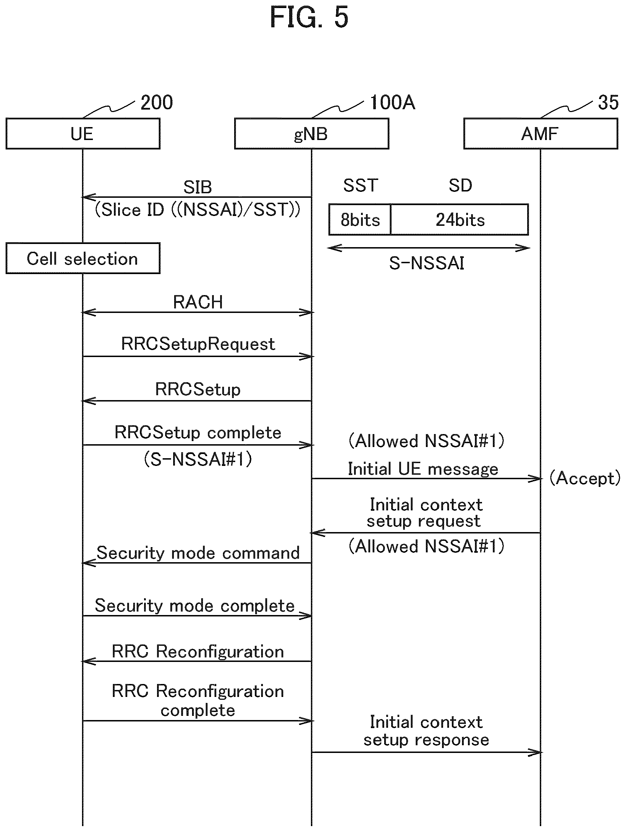

The S-NSSAI (hereinafter, abbreviated as NSSAI as appropriate) may include a slice/service type (SST) and a slice differentiator (SD) (see FIG. 5). Note that an SD is optional and may not be included. The S-NSSAI is defined in 3GPP TS23.003, chapter 28.4.2.

An SST may indicate an expected behavior of a network slice in terms of a function and a service. An SST may be allocated eight bits.

An SD may complement an SST and differentiate between multiple network slices of the same slice or the same service type. An SD may be allocated 24 bits.

An S-NSSAI (NSSAI), an SST, or an SD may be called a slice ID. That is, the slice ID may be an SST only or may include an SST and an SD. In a similar manner, an NSSAI may include an SST only or may include an SST and an SD.

The control unit 150 can determine a resource for initial access based on a handover request from a handover-source radio base station, specifically, information about a slice included in the handover request.

More specifically, the control unit 150 can determine an RACH configuration based on a slice ID included in the handover request. The control unit 150 can transmit a handover request Ack including the determined RACH configuration (slice-based RACH configuration) to the handover-source radio base station.

The RACH configuration may include ra-contentionResolutionTimer, PowerRampingStepHighPriority, ScalingFactorBI, and the like. Note that a specific determined example of the slice-based RACH configuration will be described below.

### (2.2) UE 200

FIG. 3 is a functional block configuration diagram of the UE 200. As illustrated in FIG. 3, the UE 200 includes a radio transmission unit 210, a radio reception unit 220, a system information reception unit 225, an RA processing unit 230, a slice selection unit 240, and a control unit 250.

The radio transmission unit 210 transmits an uplink signal (UL signal) in accordance with NR to the gNB 100A (or the gNB 100B, hereinafter the same).

The radio reception unit 220 receives a downlink signal (DL signal) in accordance with NR from the gNB 100A. The radio reception unit 220 may also receive a message of an RRC from the gNB 100A. The message may include various RRC messages specified in the 3GPP TS38.331. In the present embodiment, the radio reception unit 220 constitutes a reception unit that receives a message of a radio resource control layer.

The system information reception unit 225 receives system information notified in a cell. Specifically, the system information reception unit 225 can receive various SIBs notified in a cell on which the UE 200 is camping (in which the UE 200 is present) . As described above, the SIBs may include SIB1 and SIB4. In the present embodiment, the system information reception unit 225 constitutes a reception unit that receives notification information notified in a cell.

The RA processing unit 230 performs processing for a random access procedure (RA procedure). The RA processing unit 230 may oppose the RA processing unit 130 of the gNB 100A and support the same RA procedure as the RA processing unit 130. Specifically, the RA processing unit 230 can perform transmission of a random access preamble (msg.1), reception of a random access response (msg.2), transmission of a schedule transmission (msg.3), reception of a contention resolution (msg.4), and the like.

The slice selection unit 240 selects a slice (network slice) according to a service performed in the UE 200. The service may include eMBB, mIoT, URLLC, and the like as described above.

The slice selection unit 240 can inform information about a slice obtained based on SIB1 and/or SIB4, from an NAS (non-access stratum) layer to an AS (access stratum) layer. The slice selection unit 240 can select a slice based on a slice ID (which may be a service type (SST)) selected in the past or a slice ID (which may be a service type (SST)) informed using a paging message, taking into consideration both cellReselectionPriority and a service type notified using SIB4 (that is, a higher priority frequency is chosen and the slice ID (SST) supports that frequency).

The control unit 250 controls functional blocks constituting the UE 200. In particular, in the present embodiment, the control unit 250 can perform cell selection based on information about a slice included in system information (notification information).

The control unit 250 can also perform cell selection based on information about a slice included in a received RRC message. As described above, the information about the slice is information about a slice supported via a cell which the UE 200 camps on, and may include an S-NSSAI (NSSAI), an SST, an SD, or the like.

The control unit 250 can perform cell selection (which may include reselection) based on a slice selected by the slice selection unit 240. Specifically, the control unit 250 may select a cell in which a slice corresponding to a service performed in the UE 200 is available.

### (3) Operations of radio communication system

Next, operations of the radio communication system 10 will be described. Specifically, operations for cell selection (including reselection) and handover that take the supported slice (service type) into consideration will be described.

### (3.1) Operation example 1

In this operation example, the gNB 100A uses system information (SIB) to notify information about a slice supported by a cell (which may be interpreted as a RAN node or PAN).

### (3.1.1) Issue

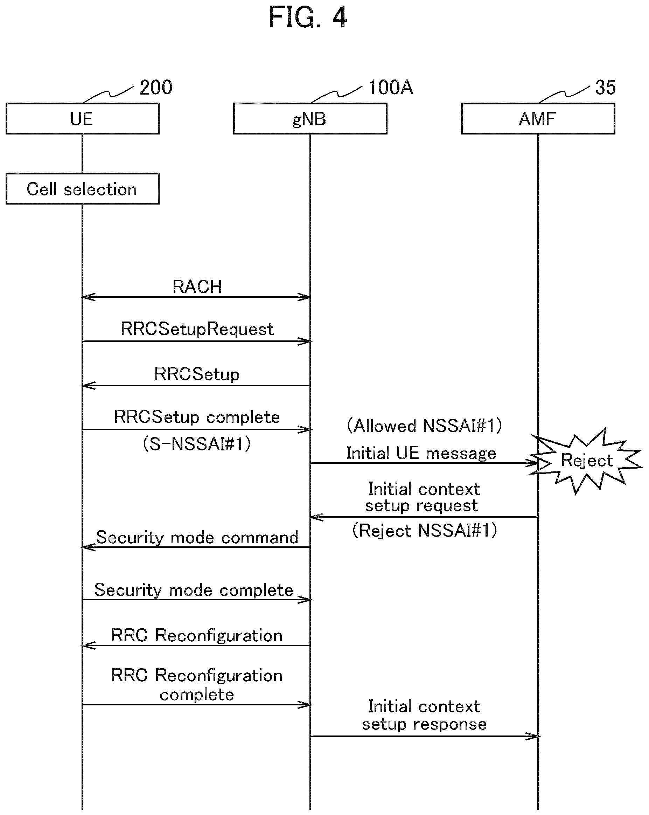

FIG. 4 illustrates an example communication sequence for conventional cell selection when a slice is used. As illustrated in FIG. 4, when a RAN node that does not support a slice (S-NSSAI #1 is used here for convenience, hereinafter the same) required by the UE 200 is selected and cell selection is performed, the Initial UE message for the AMF 35 is rejected. Note that the same applies to a registration request of the UE 200.

Thus, in a conventional example, the UE 200 has an issue of not being able to perform cell selection with an awareness of the NSSAI supported by the radio access network (RAN).

### (3.1.2) Operation example

### (3.1.2.1) Operation example 1-1

FIG. 5 illustrates an example communication sequence for cell selection according to operation example 1-1. As illustrated in FIG. 5, prior to cell selection by the UE 200, the NG-RAN 20 (here, gNB 100A) broadcasts information about a slice into the cell using system information (SIB).

For example, the gNB 100A can transmit an SIB including a slice ID to the UE 200. Using SIB1 and/or SIB4 as the SIB may be considered.

Specifically, the gNB 100A uses SIB1 to broadcast a supported slice/service type (SST) and indicates to the UE 200 a slice ID ((NSSAI)/SST) supported by the cell which the UE 200 is currently camping on.

More specifically, a slice ID ((NSSAI)/SST) supported for each tracking area may be included in cellAccessRelatedInfo included in SIB1. Alternatively, a slice ID ((NSSAI)/SST) supported for each RAN-AreaCode may be included.

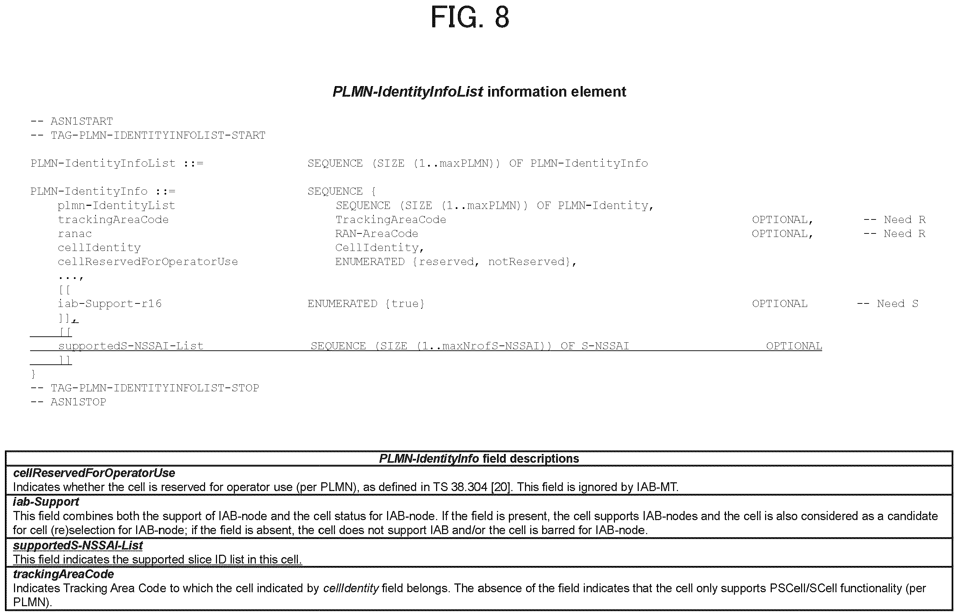

FIG. 8 illustrates an example configuration of PLMN-IdentityInfoList included in cellAccessRelatedInfo. As illustrated in FIG. 8, PLMN-IdentityInfoList includes a supportedS-NSSAI-List field. The supportedS-NSSAI-List field may indicate a list of slice IDs supported in the cell.

SIB4 may also include a slice ID ((NSSAI)/SST) supported for each frequency. Specifically, interFreqCarrierFreqInfo may include a supported slice ID ((NSSAI)/SST). Alternatively, the frequency supported for each slice may be included.

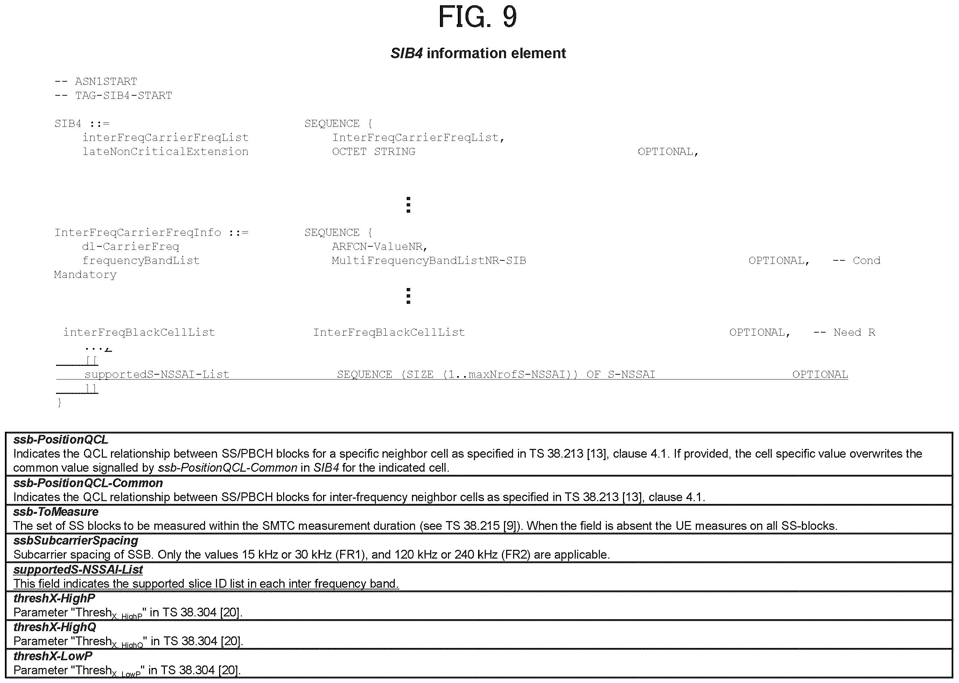

FIG. 9 illustrates an example configuration of SIB4. As illustrated in FIG. 9, SIB4 includes a supportedS-NSSAI-List field. The supportedS-NSSAI-List field may indicate a list of slice IDs supported in each interfrequency band.

Upon receiving such an SIB, the UE 200 informs information about a slice read from SIB1/SIB4 from the AS with respect to the NAS in the UE 200.

The UE 200 may perform cell selection based on a slice ID (which may be an SST) selected in the past or a slice ID (which may be an SST) informed using a paging message, taking into consideration both cellReselectionPriority and a service type notified using SIB4 (that is, a higher priority frequency is chosen and the slice ID (SST) supports that frequency).

### (3.1.2.2) Operation example 1-2

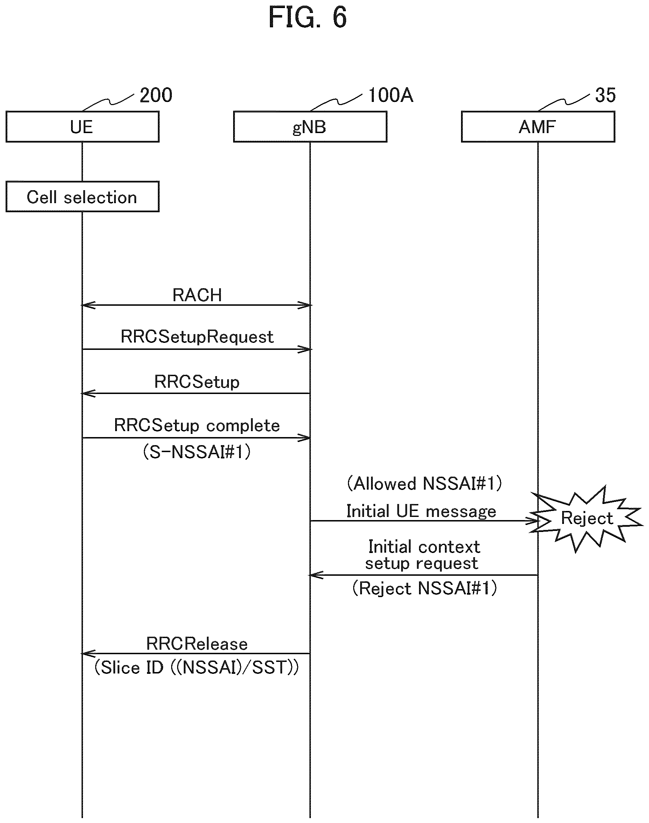

FIG. 6 illustrates an example communication sequence for cell selection according to operation example 1-2. As illustrated in FIG. 6, as in the conventional example (see FIG. 4), the UE 200 performs cell selection without recognizing a slice that the cell (which may be a RAN node or RAN) supports, and the Initial UE message for the AMF 35 is rejected.

In this case, the gNB 100A can recognize that the slice (S-NSSAI #1) has been rejected through an initial context setup request. The gNB 100A can cause a slice ID ((NSSAI)/SST) to be included in an RRCRelease message transmitted to the UE 200.

Specifically, the gNB 100A may cause a slice ID ((NSSAI)/SST) supported for each frequency to be included in cellReselectionPriorities of RRCRelease. Alternatively, the gNB 100A may cause a supported frequency to be included per slice.

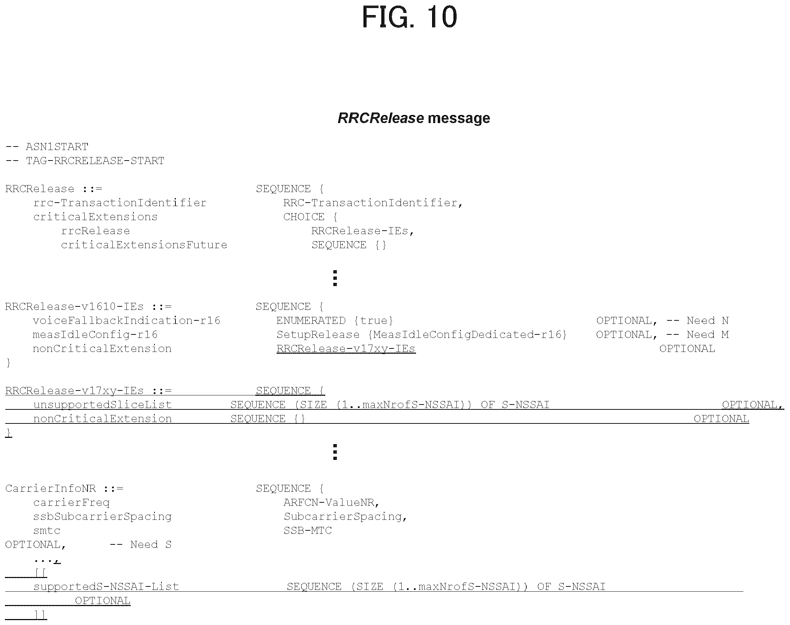

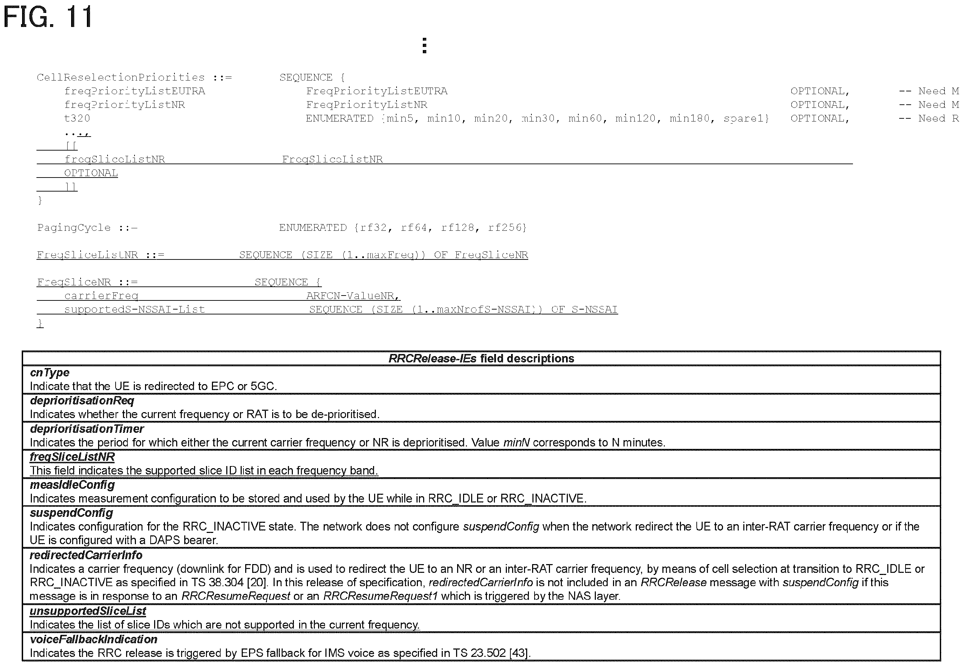

FIGs. 10 and 11 illustrate example configurations of an RRCRelease message. As illustrated in FIGs. 10 and 11, RRCRelease may include unsupportedSliceList, supportedS-NSSAI-List, and freqSliceListNR fields.

The unsupportedSliceList field may indicate a list of slice IDs unsupported at the current frequency. The freqSliceListNR field may indicate a list of slice IDs supported at each frequency band.

Thus, when the gNB 100A/AMF 35 does not support an S-NSSAI (S-NSSAI #1) informed using RRCSetupComplete transmitted from the UE 200, the gNB 100A may cause the slice ID ((NSSAI)/SST) to be included in FreqPriorityNR IE of RRCRelease.

The UE 200 may perform cell selection based on a slice ID (which may be an SST) selected in the past or a slice ID (which may be an SST) informed using a paging message, taking into consideration both cellReselectionPriority and a service type notified using RRCRelease (that is, a higher priority frequency is chosen and the slice ID (SST) supports that frequency).

The gNB 100A may also inform the UE 200 of a slice ID unsupported at the current frequency, using RRCRelease, or may cause a supported slice ID to be included in RedirectedCarrierInfo of RRCRelease.

### (3.2) Operation example 2

In this operation example, the gNB 100A, the gNB 100B, and the UE 200 perform a random access procedure that takes the supported slice into consideration.

### (3.2.1) Issue

In network slicing, specifically in RAN slicing, an object is to achieve a slice-based RACH configuration.

However, during a handover of the UE 200 (which may be referred to as cell transition), a target radio base station (gNB) is unable to prepare a random access channel (RACH) resource with an awareness of a slice ID ((NSSAI)/SST) used by the UE 200 in a cell (source cell) formed by a source radio base station.

### (3.2.2) Operation example

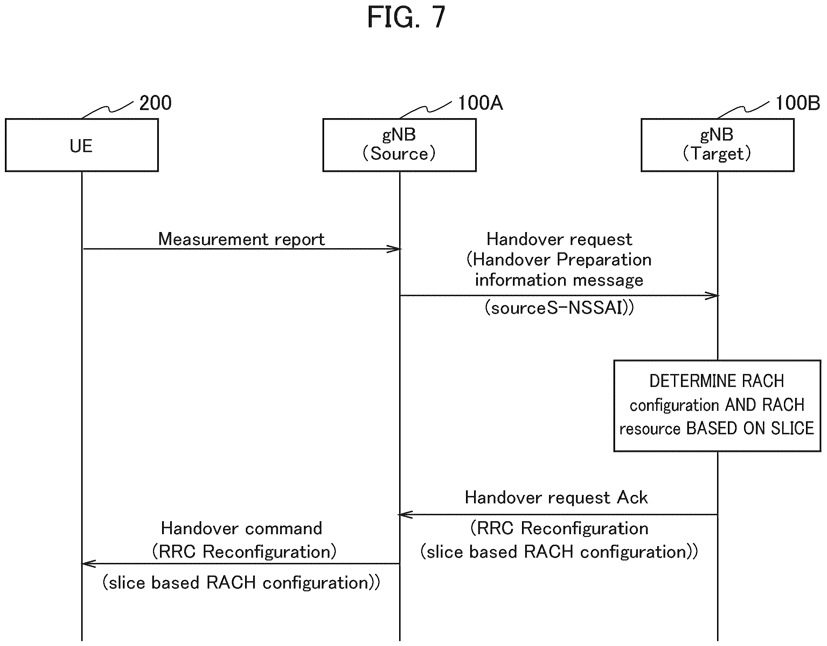

FIG. 7 illustrates an example of a communication sequence for a handover in operation example 2. As illustrated in FIG. 7, the gNB 100A (source radio base station) may cause a slice ID (which may be a service type) used by the UE 200 in a source cell to be included in Handover Preparation information included in a handover request transmitted to the gNB 100B (target radio base station).

The gNB 100B may determine an RACH configuration, specifically, ra-contentResolutionTimer, PowerRampingStepHighPriority, ScalingFactorBI, or an RACH resource, based on a slice ID/service type set by the source radio base station.

For example, when a slice ID/service type is a critical URLLC service, the value of ra-contentionResolutionTimer may be shortened, PowerRampingStepHighPriority may be set higher, scalingFactorBI may be set lower, and RACH may be prioritized. Also, a reliable RACH resource may be provided.

A reliable RACH resource may mean that RACH resource isolation/RACH partition should be performed in advance in a radio base station, that is, a reliable RACH resource is set aside and the reliable RACH resource is allowed to be used only by a UE that requires a high reliability service.

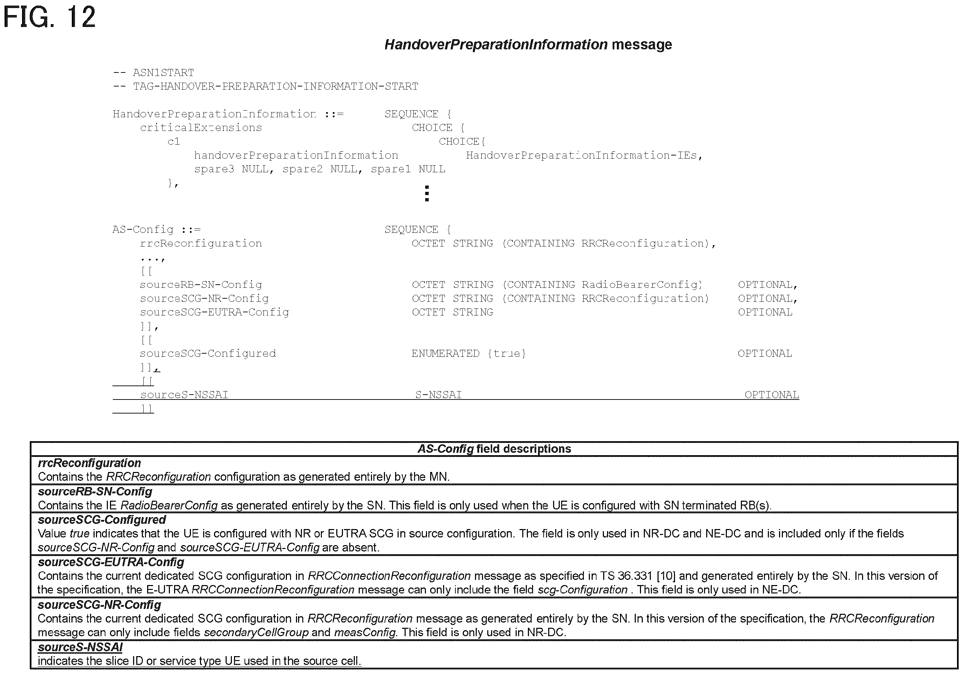

FIG. 12 illustrates an example configuration of Handover Preparation information. As illustrated in FIG. 12, Handover Preparation information may include the sourceS-NSSAI field.

The sourceS-NSSAI field may indicate a slice ID or service type used by a UE in a source cell.

Note that a handover request Ack and a handover command may include an RRC Reconfiguration, and the RRC Reconfiguration may include a slice-based RACH configuration.

In addition, although not a direct solution to the issues described above, when the UE 200 transmits a measurement report to the gNB 100A (source radio base station), the measurement report may be transmitted to the source radio base station without including measurement results of neighbor cells that do not support the slice ID/service type used on the source radio base station. This can reduce the risk that the target radio base station will not support the slice ID/service type used on the source radio base station.

### (4) Operational effects

According to the above-described embodiment, the following actions and effects can be obtained. Specifically, in the radio communication system 10 (gNB 100A, gNB 100B, and UE 200), information about a slice supported via a cell that the UE 200 camps on is provided to the UE 200 through notification information or an RRC layer message.

Thus, the UE 200 can realize appropriate cell selection with an awareness of a slice supported by a RAN node (cell). That is, the UE 200 will be able to perform cell selection (reselection) with an awareness of a slice (service type) supported by a RAN node, and the UE 200 will be able to quickly select an appropriate RAN node and attach this to the 5GC 30, and it is expected that unnecessary radio connection requests (such as a waste of radio resources and control plane overheads) can be avoided.

Also, in the present embodiment, the gNB 100A and gNB 100B can determine an initial access configuration, specifically, an RACH configuration, based on information about a slice included in a handover request. Thus, RACH resources can be prepared with an awareness of a slice ID ((NSSAI)/SST) used by the UE 200 in the source cell. This can increase the possibility of continuous service provision with an awareness of a slice (service type) used by the UE 200.

### (5) Other Embodiments

Although an embodiment has been described above, it is obvious to those skilled in the art that embodiments are not limited to the description of the embodiment and that various modifications and improvements thereof are possible.

For example, in the above-described embodiment, an example of using a slice ID as information about a slice was mainly described, but the information about the slice may be interpreted as, in other words, information indicating the type of service (eMBB and the like) provided by the radio communication system 10 (which may be a radio access network or a core network).

In addition, a message informing the UE 200 of information about a slice is not limited to RRCRelease but may be any another RRC message as long as it is a message of an RRC layer.

In addition, the block diagrams (FIGs. 2 and 3) used in the description of the above-described embodiment illustrate blocks in units of functions. Those functional blocks (components) can be realized by a desired combination of at least one of hardware and software. The method for realizing each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work is called a transmitting unit or a transmitter. For any of the above, as described above, the realization method is not particularly limited.

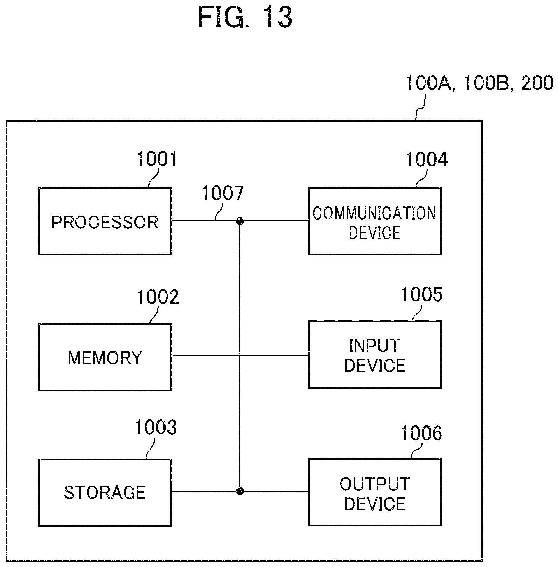

Further, the gNB 100A, the gNB 100B, and the UE 200 (the device) described above may function as a computer that performs the processing of the radio communication method of the present disclosure. FIG. 13 is a diagram illustrating an example of a hardware configuration of the device. As illustrated in FIG. 13, the radio transmission unit 110 and the radio reception unit 120 may be configured as a computer device including a processor 1001, a memory 1002, a storage 1003, a communication device 1004, an input device 1005, an output device 1006, a bus 1007, and the like.

In the following description, the term "device" can be substituted with "circuit", "device", "unit", or the like. A hardware configuration of the device may include one or plurality of the devices in the figure or may not include some of the devices.

Each of the functional blocks (see FIGs. 2 and 3) of the device is implemented by means of any of hardware elements of the computer device or a combination of the hardware elements.

Each of the functions of the device is realized by loading predetermined software (programs) onto hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a Central Processing Unit (CPU) including interfaces with peripheral devices, control unit devices, arithmetic devices, registers, and the like.

Moreover, the processor 1001 reads a program (program code), a software module, data, and the like from at least one of the storage 1003 and the communication device 1004 into the memory 1002 and executes various processes according to them. As the program, a program causing the computer to execute at least part of the operation described in the above embodiment is used. Further, various processes described above can be executed by one processor 1001 or can be executed simultaneously or sequentially by two or more processors 1001. The processor 1001 can be implemented by using one or more chips. The program may be transmitted from a network via a telecommunication line.

The memory 1002 is a computer readable recording medium and may be configured, for example, with at least one of a read only memory (ROM), erasable programmable ROM (EPROM), electrically erasable programmable ROM (EEPROM), random access memory (RAM), and the like. The memory 1002 may be referred to as a register, cache, main memory (main storage device), or the like. The memory 1002 may store therein programs (program codes), software modules, and the like that can execute the method according to one embodiment of the present disclosure.

The storage 1003 is a computer readable recording medium. Examples of the storage 1003 include an optical disk such as compact disc ROM (CD-ROM), a hard disk drive, a flexible disk, a magneto-optical disk (for example, a compact disk, a digital versatile disk, a Blu-ray (registered trademark) disk), a smart card, a flash memory (for example, a card, a stick, a key drive), a floppy (registered trademark) disk, a magnetic strip, and the like. The storage 1003 can be called an auxiliary storage device. The recording medium can be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also called, for example, a network device, a network control unit, a network card, a communication module, and the like.

The communication device 1004 may include a high-frequency switch, a duplexer, a filter, a frequency synthesizer, and the like in order to realize, for example, at least one of frequency division duplex (FDD) and time division duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that the input device 1005 and the output device 1006 may have an integrated configuration (for example, a touch screen).

Also, devices such as the processor 1001 and the memory 1002 are connected to each other with a bus 1007 for communicating information. The bus 1007 may be constituted by a single bus or may be constituted by different buses for each device-to-device connection.

Further, the device may be configured to include hardware such as a microprocessor, a digital signal processor (DSP), an application specific integrated circuit (ASIC), a programmable logic device (PLD), and a field programmable gate array (FPGA) . Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, downlink control information (DCI), uplink control information (UCI)), higher layer signaling (for example, RRC signaling, medium access control (MAC) signaling), notification information (a master information block (MIB), a system information block (SIB), other signals, or a combination thereof. The RRC signaling may also be referred to as an RRC message, for example, or may be an RRC connection setup message, an RRC connection reconfiguration message, or the like.

Each of the above aspects/embodiments can be applied to at least one of Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps using an exemplary order and are not limited to the specific order presented.

The specific operation that is performed by a base station in the present disclosure may be performed by its upper node in some cases. In a network constituted by one or more network nodes having a base station, it is obvious that the various operations performed for communication with the terminal may be performed by at least one of the base station and the other network nodes other than the base station (for example, an MME, an S-GW, and the like may be considered, but the configuration employed is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information can be stored in a specific location (for example, a memory) or can be managed in a management table. The information to be input/output can be overwritten, updated, or added to. The information can be deleted after outputting. The inputted information can be transmitted to another device.

A determination may be made by using a value (0 or 1) represented by one bit, by a truth-value (Boolean: true or false), or by comparison of numerical values (for example, comparison with a predetermined value).

Each of the aspects/embodiments described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Whether referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instructions, information, and the like may be transmitted and received via a transmission medium. For example, when software is transmitted from a website, a server, or another remote source by using at least one of a wired technology (a coaxial cable, an optical fiber cable, a twisted pair cable, a digital subscriber line (DSL), or the like) and a wireless technology (infrared light, microwaves, or the like), then at least one of these wired and wireless technologies is included within the definition of the transmission medium.

Information, signals, or the like described in the present disclosure may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or a desired combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a component carrier (CC) may be referred to as a carrier frequency, a cell, a frequency carrier, or the like.

The terms "system" and "network" used in the present disclosure can be used interchangeably.

Furthermore, information, parameters, and the like described in the present disclosure can be represented by an absolute value, can be represented by a relative value from a predetermined value, or can be represented by corresponding other information. For example, a radio resource can be indicated using an index.

Names used for the above parameters are not restrictive names in any respect. In addition, formulas and the like using these parameters may be different from those explicitly disclosed in the present disclosure. Because the various channels (for example, a PUCCH, a PDCCH, or the like) and information elements can be identified by any suitable names, the various names allocated to these various channels and information elements shall not be restricted in any way.

In the present disclosure, the terms such as "base station (base station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a picocell.

A base station can accommodate one or more (for example, three) cells (also called sectors). In a configuration in which a base station accommodates a plurality of cells, the entire coverage area of the base station can be divided into a plurality of smaller areas. In each such smaller area, a communication service can be provided by a base station subsystem (for example, a small base station for indoor use (remote radio head: RRH)).

The term "cell" or "sector" refers to part or all of the coverage area of at least one of a base station and a base station subsystem that performs a communication service in this coverage.

In the present disclosure, the terms such as "mobile station (mobile station: MS)", "user terminal", "user equipment (user equipment: UE)", and "terminal" can be used interchangeably.

A mobile station may be referred to as a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The mobile body may be a vehicle (for example, a car, an airplane, or the like), an unmanned moving body (a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be substituted with a mobile station (user terminal, hereinafter the same). For example, each aspect/embodiment of the present disclosure may be applied to a configuration in which communication between a base station and a mobile station is replaced with communication between a plurality of mobile stations (for example, this may be called device-to-device (D2D), vehicle-to-everything (V2X), or the like) . In this case, the mobile station may have the function of a base station. In addition, words such as "uplink" and "downlink" may also be substituted with words corresponding to inter-terminal communication (for example, "side"). For example, "uplink channel", "downlink channel", or the like may be substituted with "side channel".

Similarly, "mobile station" in the present disclosure may be substituted with "base station". In this case, the base station may have the function of a mobile station. A radio frame may be composed of one or more frames in the time domain. Each of one or more frames in the time domain may be referred to as a subframe. A subframe may be further composed of one or more slots in the time domain. The subframe may have a fixed time length (for example, 1 ms) independent of the numerology.

Numerology may be a communication parameter applied to at least one of transmission and reception of a certain signal or channel. The numerology may indicate at least one of, for example, a subCarrier spacing (SCS), a bandwidth, a symbol length, a cyclic prefix length, a transmission time interval (TTI), the number of symbols per TTI, a radio frame configuration, a specific filtering process performed by a transceiver in a frequency domain, and a specific windowing process performed by the transceiver in the time domain, and the like.

A slot may be composed of one or more symbols (orthogonal frequency division multiplexing (OFDM) symbols, single carrier frequency division multiple access (SC-FDMA) symbols, or the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding thereto.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, may be a period shorter than 1 ms (for example, 1-13 symbols), or may be a period longer than 1 ms. Note that a unit representing a TTI may be called a slot, a minislot, or the like instead of a subframe.

Here, a TTI refers to the minimum time unit of scheduling in radio communication, for example. For instance, in the LTE system, the base station performs scheduling for allocating radio resources (a frequency bandwidth, a transmission power, or the like that can be used in each user terminal) to each user terminal in units of TTI. The definition of a TTI is not limited to this.

A TTI may be a transmission time unit such as a channel-encoded data packet (transport block), a code block, or a code word, or may be a processing unit such as scheduling or link adaptation. When a TTI is given, a time interval (for example, the number of symbols) in which a transport block, a code block, a code word, or the like actually mapped may be shorter than the TTI.

When one slot or one minislot is called a TTI, one or more TTIs (that is, one or more slots or one or more minislots) may be the minimum scheduling unit. The number of slots (minislot number) constituting the minimum time unit of the scheduling may be controlled.

A TTI having a time length of 1 ms may be referred to as a usual TTI (TTI in LTE Rel. 8-12), a normal TTI, a long TTI, a normal subframe, a normal subframe, a long subframe, a slot, and the like. A TTI shorter than a usual TTI may be referred to as a shortened TTI, a short TTI, a partial TTI (partial or fractional TTI), a shortened subframe, a short subframe, a minislot, a subslot, a slot, and the like.

In addition, a long TTI (for example, usual TTI, subframe, or the like) may be substituted with a TTI having a time length exceeding 1 ms, and a short TTI (for example, shortened TTI, or the like) may be substituted with a TTI having a TTI length of less than the TTI length of a long TTI and a TTI length of 1 ms or more.

A resource block (RB) is a resource allocation unit in the time domain and the frequency domain, and may include one or more consecutive subcarriers in the frequency domain. The number of subcarriers included in an RB may be the same regardless of numerology, and may be 12, for example. The number of subcarriers included in an RB may be determined based on the numerology.

Also, the time domain of an RB may include one or more symbols, and may have a length of one slot, one minislot, one subframe, or one TTI. Each TTI, subframe, or the like may be composed of one or more resource blocks.

Note that one or more RBs may be called a physical resource block (PRB), a subcarrier group (SCG), a resource element group (REG), a PRB pair, an RB pair, or the like.

A resource block may be configured by one or more resource elements (RE). For example, one RE may be a radio resource domain of one subcarrier and one symbol.

A bandwidth part (BWP) (which may be called a partial bandwidth, or the like) may represent a subset of consecutive common resource blocks (RBs) for a certain numerology in a certain carrier. Here, a common RB may be specified by an index of an RB based on a common reference point of the carrier. A PRB may be defined in a certain BWP and numbered within that BWP.

A BWP may include a UL BWP and a DL BWP. One or more BWPs may be set in one carrier for a UE.

At least one of the configured BWPs may be active, and a UE does not have to expect to transmit and receive predetermined signals/channels outside the active BWP. Note that "cell", "carrier", and the like in the present disclosure may be substituted with "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in an RB, and the number of symbols included in a TTI, a symbol length, and a cyclic prefix (CP) length can be changed in various manners.

The terms "connected", "coupled", or any variations thereof mean any direct or indirect connection or coupling between two or more elements, and can include that one or more intermediate elements may be present between two elements that are "connected" or "coupled" to each other. The coupling or connection between the elements may be physical, logical, or a combination thereof. For example, "connection" may be substituted with "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in a radio frequency region, a microwave region, a light (both visible and invisible) region, or the like.

A reference signal may be abbreviated as an RS and may be called a pilot in accordance with applicable standards.

As used in the present disclosure, the phrase "based on" does not mean "based only on" unless explicitly stated otherwise. In other words, the phrase "based on" means both "based only on" and "based at least on".

"Means" in the configuration of each above device may be replaced with "unit", "circuit", "device", or the like.

Any reference to elements using a designation such as "first", "second", or the like used in the present disclosure generally does not limit the amount or order of those elements. Such designations can be used in the present disclosure as a convenient way to distinguish between two or more elements. Thus, reference to the first and second elements does not imply that only two elements can be adopted, or that the first element must precede the second element in some or other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in the present disclosure, the term "determining" may encompass a wide variety of actions. "Determining" can include deeming that determining has been performed by, for example, judging, calculating, computing, processing, deriving, investigating, searching (looking up, search, inquiry (e.g., searching in a table, database, or another data structure)), ascertaining, and the like. In addition, "determining" can include deeming that determining has been performed by receiving (for example, receiving information), transmitting (for example, transmitting information), inputting, outputting, accessing (for example, accessing data in a memory), and the like. In addition, "determining" can include deeming that determining has been performed by resolving, selecting, choosing, establishing, comparing, and the like. That is, "determining" can include deeming that "determining" regarding some action has been performed. Moreover, "determining" may be read as "assuming", "expecting", "considering", or the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

10 Radio communication system
20 NG-RAN
30 5GC
35 AMF
100A, 100B gNB
110 Radio transmission unit
120 Radio reception unit
130 RA processing unit
140 System information transmission unit
145 Handover processing unit
150 Control unit
200 UE
210 Radio transmission unit
220 Radio reception unit
225 System information reception unit
230 RA processing unit
240 Slice selection unit
250 Control unit
1001 Processor
1002 Memory
1003 Storage
1004 Communication device
1005 Input device
1006 Output device
1007 Bus

## Claims

1. A radio base station comprising:
a transmission unit that transmits notification information to a terminal in a cell; and
a control unit that causes information about a slice supported via the cell to be included in the notification information.

2. A radio base station comprising:
a transmission unit that transmits a message of a radio resource control layer to a terminal in a cell; and
a control unit that causes information about a slice supported via the cell to be included in the message.

3. A terminal comprising:
a reception unit that receives notification information notified in a cell; and
a control unit that performs cell selection based on information about a slice supported via the cell, the information being included in the notification information.

4. A terminal comprising:
a reception unit that receives a message of a radio resource control layer; and
a control unit that performs cell selection based on information about a slice supported via a camp-on cell, the information being included in the message.

5. A radio base station comprising:
a reception unit that receives a handover request of a terminal in a cell from a handover-source radio base station;
a control unit that determines a setting for initial access based on information about a slice supported via the cell, the information being included in the handover request; and
a transmission unit that transmits setting information indicating the setting that has been determined to the handover-source radio base station.
